# DEMANDE DE BREVET EUROPEEN

(11) **EP 2 899 145 A1**
(43) Date de publication de la demande: **29.07.2015**
(21) Numéro de dépôt: 14290394.7
(22) Date de dépôt: 18.12.2014
(51) Int. Cl.: B65G 1/137

(54) **Système d'aide à la préparation de commandes multiples dans un entrepôt logistique**

(30) Priorité: 20.12.2013 FR 1303056
(71) Demandeur: Balea SA, 34270 Saint-Mathieu de Trèviers (FR)
(72) Inventeur: Cosmas, Vassili, 34270 Saint Mathieu DE Treviers (FR)
(74) Mandataire: Gosse, Michel

(57) **Abrégé**

L'invention concerne un système d'aide à la préparation de commandes multiples dans un entrepôt logistique au moyen de contenants d'expédition, supportés par des chariots (2), aptes à réceptionner les articles des différentes commandes. Chaque chariot (2) comporte :
a) au niveau de chaque contenant (1), un dispositif (5) pourvu d'un moyen (51) apte à produire un signal lumineux de repérage du contenant (1) à charger et d'un moyen (52) apte à afficher la quantité d'un même article à y placer ;
b) au niveau du chariot (2), un dispositif de pesée destiné à vérifier, pour chaque ordre de préparation de commande, que le type d'article et le nombre d'articles identiques déposés dans le contenant (1) désigné correspondent à celui de la commande en cours d'exécution.

## Description

### DOMAINE DE L'INVENTION

La présente invention concerne un système d'aide à la préparation de commandes multiples dans un entrepôt logistique du genre comprenant essentiellement :
- une zone de stockage des articles à expédier qui sont essentiellement identifiés par un emplacement et un code article ;
- des contenants d'expédition, supportés par des chariots manuels ou mécanisés, aptes à réceptionner les articles des différentes commandes ;
- des terminaux portables de préparation des commandes apte à fournir aux préparateurs les informations qualitatives et quantitatives relatives aux commandes à traiter ainsi que leur localisation dans la zone de stockage et leur destination dans le ou les contenants d'expédition ;
- un serveur qui gère l'entrepôt logistique et qui transforme une commande client en un ordre de préparation de commande dont le contenu est transmis au terminal portable du préparateur concerné.

### EXPOSE DE L'ARRIERE PLAN TECHNOLOGIQUE

Dans un tel système, le préparateur, quand il reçoit la commande sur son terminal, doit se rendre à l'emplacement où se trouvent le ou les articles à expédier. Il scanne alors l'étiquette correspondante, saisit le nombre d'articles et va les placer dans le ou les contenants correspondants en scannant une nouvelle étiquette (code détrompeur) qui identifie le contenant et en confirmant, à partir de son terminal, qu'il a bien placé le ou les articles dans ledit contenant.

Une telle méthode présente les deux principaux inconvénients suivants :
- perte en productivité par le scannage des étiquettes (code détrompeur) associées à chaque contenant ;
- perte en fiabilité de la dépose d'un article dans le bon contenant car il n'y a aucun moyen permettant de contrôler que celui-ci a bien été placé dans le bon contenant et dans la bonne quantité.

Des solutions, consistant à équiper les contenants de moyens d'affichage servant également de moyens de repérage du contenant de destination, sont décrites dans les principaux brevets suivants : US5505473, JPH06115636, et JP2004. Malheureusement, de telles solutions présentent l'inconvénient majeur de laisser, au seul opérateur, la vérification du bon positionnement du produit tant au niveau unitaire que quantitatif et ce sans le moindre contrôle automatique.

### RESUME DE L'INVENTION

L'invention vise à proposer un système :
- qui améliore la qualité de la préparation des commandes en repérant visuellement les contenants de destination, en indiquant la quantité du même article à y placer et en contrôlant qualitativement et quantitativement les articles en conformité avec la commande en cours d'exécution ;
- qui s'adapte à n'importe quel support ou matériel de manutention et ce quelque soit le nombre et les dimensions des contenants ;
- qui s'adapte à n'importe quel logiciel de tout système d'aide à la préparation de commandes.

Selon les caractéristiques essentielles de l'invention, le système d'aide à la préparation de commandes multiples dans un entrepôt logistique se caractérise essentiellement en ce que chaque chariot comporte :
a) au niveau de chaque contenant, un dispositif pourvu d'un moyen apte à produire un signal lumineux de repérage du contenant à charger et d'un moyen apte à afficher la quantité d'un même article à y placer ;
b) au niveau du chariot, un dispositif de pesée destiné à vérifier, pour chaque ordre de préparation de commande :
   - que l'article, déposé dans le contenant désigné, correspond à celui de la commande en cours d'exécution en comparant son poids à celui, portant la même référence, mémorisé dans le serveur de l'entrepôt ;
   - que le nombre d'articles identiques, déposés dans le contenant désigné, correspond au type et au nombre d'articles de la commande en cours d'exécution en comparant le poids total desdits articles à celui, portant la même référence, mémorisé dans le serveur de l'entrepôt.

Le système comporte également un concentrateur Wifi dédié qui communique avec le dispositif de pesée, les moyens de repérage et d'affichage et avec un serveur dédié qui communique avec le serveur de gestion de l'entrepôt qui communique lui-même avec les terminaux portables via le réseau Wifi de l'entrepôt.

Selon des particularités de réalisation de l'invention :
- le moyen apte à produire le signal lumineux de repérage est choisi parmi un voyant lumineux ou un faisceau lumineux apte à éclairer le contenant qui lui est dédié ;
- le dispositif de repérage et d'affichage peut être pourvu d'un bouton poussoir de confirmation ;
- le support du dispositif de repérage et d'affichage est réalisé, dans le cas d'un chariot mécanisé, au moyen d'une potence fixée, de manière amovible, audit chariot et ce quel qu'en soit le type.

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins :

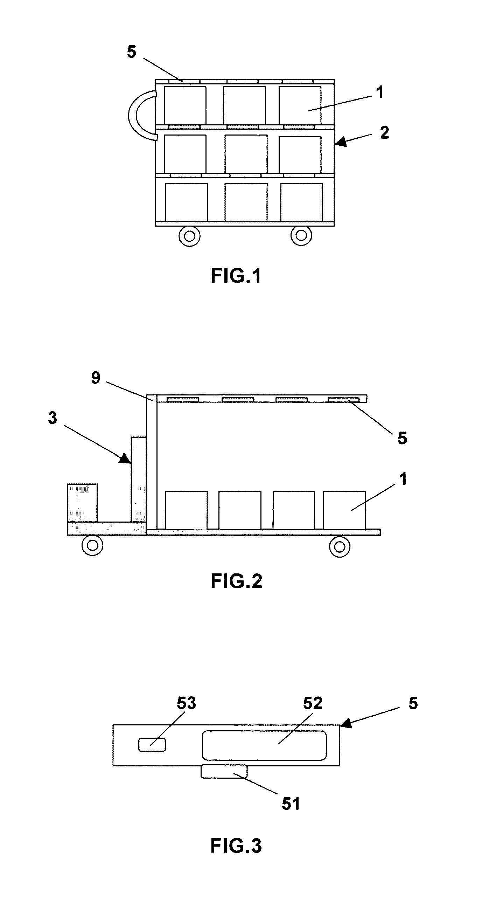

- la figure 1 représente, schématisé, un chariot manuel, intégrant les dispositifs de repérage et d'affichage ;
- la figure 2 représente, schématisé, un chariot mécanisé équipé d'un potence porteuse des dispositifs de repérage et d'affichage ;
- la figure 3 représente, en vue frontale, un dispositif de repérage et d'affichage ;

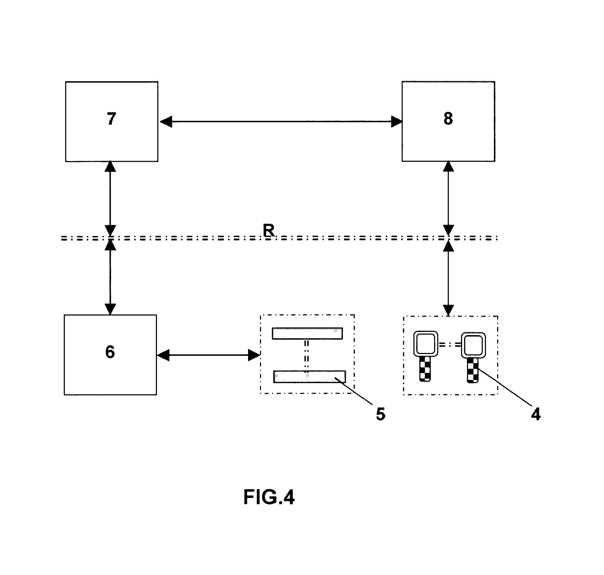

- la figure 4, représente, schématisé, le système global selon l'invention.

### DESCRIPTION DETAILLEE DE L'INVENTION

Le système représenté aux figures est un système d'aide à la préparation de commandes multiples dans un entrepôt logistique qui met essentiellement en oeuvre :
- une zone de stockage des articles à expédier qui sont essentiellement identifiés par un emplacement et un code article ;
- des contenants d'expédition (1), supportés par des chariots manuels (2) ou mécanisés (3), aptes à réceptionner les articles des différentes commandes ;
- des terminaux portables (4) de préparation des commandes apte à fournir aux préparateurs les informations qualitatives et quantitatives relatives aux commandes à traiter ainsi que leur localisation dans la zone de stockage et leur destination dans le ou les contenants d'expédition (1) ;
- un serveur (8) qui gère l'entrepôt logistique et qui transforme une commande client en un ordre de préparation de commande dont le contenu est transmis au terminal portable (4) du préparateur concerné.

Selon les caractéristiques essentielles de l'invention, chaque chariot (2,3) comporte :
a) au niveau de chaque contenant (1), un dispositif (5) pourvu d'un moyen (51) apte à produire un signal lumineux de repérage du contenant (1) à charger et d'un moyen (52) apte à afficher la quantité d'un même article à y placer, voire d'autres informations ;
b) au niveau du chariot (2,3), un dispositif de pesée destiné à vérifier, pour chaque ordre de préparation de commande :
   - que l'article, déposé dans le contenant (1) désigné, correspond à celui de la commande en cours d'exécution en comparant son poids à celui, portant la même référence, mémorisé dans le serveur (8) de l'entrepôt ;
   - que le nombre d'articles identiques, déposés dans le contenant (1) désigné, correspond au type et au nombre d'articles de la commande en cours d'exécution en comparant le poids total desdits articles à celui, portant la même référence, mémorisé dans le serveur (8) de l'entrepôt.

Il comporte également, au niveau de la zone d'exploitation, un concentrateur Wifi dédié (6) qui communique avec les moyens (51,52) de repérage et d'affichage précédents et avec un serveur dédié (7) qui communique avec le serveur (8) de gestion de l'entrepôt qui communique lui même avec les terminaux portables (4) via le réseau Wifi (R) de l'entrepôt.

Le serveur (8) de gestion de l'entrepôt logistique :
- envoie les données de préparation de commande telles que : identification du chariot et du dispositif d'affichage, quantité d'articles à traiter, données relatives au poids si la fonction pesage est présente et activée,...
- reçoit, en retour, la quantité réelle traitée, le poids,...
- gère les terminaux portables (4) de préparation des commandes (radios, vocaux,...). Le serveur dédié (7) gère les chariots, les afficheurs associés, l'illumination, le pesage et toutes les autres fonctions optionnelles (pesage, RFID,...).

Il assure l'échange des informations entre le serveur (8) et le concentrateur Wifi (6) qui lui-même assure l'échange des informations avec les terminaux portables (4).

Selon des variantes de réalisation de l'invention :
- le dispositif de repérage et d'affichage (5) peut être pourvu de moyens aptes à permettre sa fixation amovible sur son support, à la verticale de chaque contenant, quel que soit le nombre ou la dimension des contenants associés à un chariot (2,3) donné ;
- le moyen (51) apte à produire le signal lumineux de repérage peut être choisi parmi un voyant lumineux ou un faisceau lumineux apte à éclairer le contenant qui lui est dédié ;
- le dispositif de repérage et d'affichage (5) peut être pourvu d'un bouton poussoir (53) de confirmation ;
- le support du dispositif de repérage et d'affichage peut être réalisé, dans le cas d'un chariot mécanisé (3), au moyen d'une potence (9) fixée, de manière amovible, audit chariot.

Selon d'autres variantes de réalisation de l'invention :
- un dispositif de barrière lumineuse peut être placé dans la zone du contenant de manière à contrôler le passage d'une main vers celui-ci ;
- les chariots peuvent être équipés d'antennes RIFD aptes à détecter des puces compatibles associées aux différents articles ;
- un dispositif détecteur de charge peut être placé sur le chariot de manière à contrôler la prise en compte réelle des articles dans un fonctionnement en « tout ou rien ».

Bien entendu, l'homme de métier sera apte à réaliser l'invention telle que décrite et représentée en appliquant et en adaptant des moyens connus sans qu'il soit nécessaire de les décrire ou de les représenter.

Il pourra également prévoir d'autres variantes sans pour cela sortir du cadre de l'invention tel que déterminé par la teneur des revendications.

## Revendications

1. Système d'aide à la préparation de commandes multiples dans un entrepôt logistique, ledit système mettant essentiellement en oeuvre :
- une zone de stockage des articles à expédier qui sont essentiellement identifiés par un emplacement et un code article ;
- des contenants d'expédition (1), supportés par des chariots manuels (2) ou mécanisés (3), aptes à réceptionner les articles des différentes commandes ;
- des terminaux portables (4) de préparation des commandes apte à fournir aux préparateurs les informations qualitatives et quantitatives relatives aux commandes à traiter ainsi que leur localisation dans la zone de stockage et leur destination dans le ou les contenants d'expédition (1) ;
- un serveur (8) qui gère l'entrepôt logistique et qui transforme une commande client en un ordre de préparation de commande dont le contenu est transmis au terminal portable (4) du préparateur concerné ;
**caractérisé en ce que** chaque chariot (2,3) comporte :
a) au niveau de chaque contenant (1), un dispositif (5) pourvu d'un moyen (51) apte à produire un signal lumineux de repérage du contenant (1) à charger et d'un moyen (52) apte à afficher la quantité d'un même article à y placer ;
b) au niveau du chariot (2,3), un dispositif de pesée destiné à vérifier, pour chaque ordre de préparation de commande :
- que l'article, déposé dans le contenant (1) désigné, correspond à celui de la commande en cours d'exécution en comparant son poids à celui, portant la même référence, mémorisé dans le serveur (8) de l'entrepôt ;
- que le nombre d'articles identiques, déposés dans le contenant (1) désigné, correspond au type et au nombre d'articles de la commande en cours d'exécution en comparant le poids total desdits articles à celui, portant la même référence, mémorisé dans le serveur (8) de l'entrepôt.

2. Système, selon la revendication 1, **caractérisé en ce qu'**il comporte, au niveau de la zone d'exploitation du système d'aide à la préparation des commandes multiples, un concentrateur Wifi dédié (6) qui communique avec les moyens (51,52) de repérage et d'affichage, avec le dispositif de pesée des articles et avec un serveur dédié (7) qui communique avec le serveur (8) de gestion de l'entrepôt qui communique lui même avec les terminaux portables (4) via le réseau Wifi (R) de l'entrepôt.

3. Système, selon la revendication 1, **caractérisé en ce que** le moyen (51) apte à produire le signal lumineux de repérage est choisi parmi un voyant lumineux ou un faisceau lumineux apte à éclairer le contenant qui lui est dédié.

4. Système, selon la revendication 1, **caractérisé en ce que** le dispositif de repérage et d'affichage (5) est pourvu d'un bouton poussoir (53) de confirmation.

5. Système, selon la revendication 1, **caractérisé en ce que** le support du dispositif de repérage et d'affichage est réalisé, dans le cas d'un chariot mécanisé (3), au moyen d'une potence (9) fixée, de manière amovible, audit chariot.

6. Système, selon la revendication 1, **caractérisé en ce qu'**un dispositif de barrière lumineuse est placé dans la zone du contenant de manière à contrôler le passage d'une main vers celui-ci.

7. Système, selon la revendication 1, **caractérisé en ce que** les chariots sont équipés d'antennes RIFD aptes à détecter des puces compatibles associées aux différents articles.
